# EUROPEAN PATENT APPLICATION

(11) **EP 4 609 952 A1**
(43) Date of publication of application: **03.09.2025**
(21) Application number: 25158060.1
(22) Date of filing: 14.02.2025
(51) Int. Cl.: B01L 3/00, G01N 35/10

(54) **REAGENT CONTAINER**

(30) Priority: 16.02.2024 JP 2024022162
(71) Applicant: Canon Medical Systems Corporation, Tochigi 324-0036 (JP)
(72) Inventor: IIDA, Shin, Otawara-shi, 324-0036 (JP)
(74) Representative: Marks & Clerk LLP

(57) **Abstract**

A reagent container according to the embodiment is installed in a reagent storage that rotates in an automatic analyzer. The reagent container includes a shielding portion. The shielding portion partially shields the inner diameter side and the outer diameter side in the rotation inside the reagent container. A gap between the shielding portion and the side surface of the reagent container is configured to increase from the upper portion toward the lower portion of the shielding portion.

## Description

### CROSS REFERENCE TO RELATED APPLICATIONS

This application is based upon and claims the benefit of priority from the prior Japanese Patent Application No. 2024-22162, filed on February 16, 2024.

### FIELD

Embodiments disclosed in the present specification and drawings relate to a reagent container and an automatic analyzer.

### BACKGROUND

Conventionally, in an automatic analyzer, a reagent and a sample are dispensed into a reaction container, and changes in color tone, turbidity, and the like caused by a reaction of a mixed solution of the reagent and the sample are optically measured to measure test items. When the reagent is dispensed, the reagent container is moved to a suction position where the reagent is sucked by a reagent dispensing probe by rotating the reagent storage in which the reagent container is installed.

Furthermore, conventionally, the automatic analyzer has a liquid level detection function of detecting the liquid level of the reagent in order to appropriately lower the reagent dispensing probe to the liquid level in the reagent container at the suction position. However, when bubbles are generated in the reagent in the reagent container when the reagent storage is rotated and stopped, the liquid level detection function may erroneously detect the bubbles as the liquid level. In this case, the reagent dispensing probe cannot be appropriately lowered to the liquid level, and it is difficult for the reagent dispensing probe to appropriately suck the reagent.

Therefore, in order to reduce bubbles generated in the reagent, a baffle may be provided in the reagent container. The baffle reduces bubbles generated in the reagent by suppressing movement of the reagent in the reagent container.

### SUMMARY OF INVENTION

A reagent container installed in a reagent storage that rotates in an automatic analyzer, the reagent container including
a shielding portion that partially shields an inner diameter side and an outer diameter side in the rotation inside the reagent container,
in which a gap between the shielding portion and a side surface of the reagent container is configured to increase from an upper portion toward a lower portion of the shielding portion.

The shielding portion may be provided on an inner upper surface of the reagent container so as to extend toward a bottom surface of the reagent container.

The shielding portion may be provided on a bottom surface of the reagent container so as to extend toward an inner upper surface of the reagent container.

An outlet of a reagent is provided on the inner upper surface,
the bottom surface is inclined so as to be away from the inner upper surface as approaching the outlet,
a plurality of shielding portions is provided at intervals in a rotation radial direction of the reagent storage, and
a shielding portion close to the outlet among the plurality of shielding portions may extend downward more than a shielding portion far from the outlet among the plurality of shielding portions.

A plurality of shielding portions is provided at intervals in a rotation radial direction of the reagent storage, and
a gap between the shielding portion on the outer diameter side among the plurality of shielding portions and the side surface of the reagent container may be larger than a gap between the shielding portion on the inner diameter side among the plurality of shielding portions and the side surface of the reagent container.

A width of the shielding portion in a rotation direction of the reagent storage may be reduced from an upper portion to a lower portion of the shielding portion.

A plurality of shielding portions is provided at intervals in a rotation radial direction of the reagent storage, and
the width of the shielding portion on the outer diameter side among the plurality of shielding portions may be smaller than the width of the shielding portion on the inner diameter side among the plurality of shielding portions.

The width of the shielding portion may be continuously reduced from an upper portion to a lower portion of the shielding portion.

An end portion of the shielding portion in a rotation direction of the reagent storage may have a linear shape inclined with respect to the side surface of the reagent container.

An end portion of the shielding portion in a rotation direction of the reagent storage may have a curved shape inclined with respect to the side surface of the reagent container.

The width of the shielding portion may be gradually reduced from an upper portion to a lower portion of the shielding portion.

A reinforcing portion connected to the shielding portion may be further provided.

An angle formed by an end portion of the shielding portion in the rotation direction with respect to the side surface of the reagent container may be 2° or more.

The side surface of the reagent container is a side surface having a direction intersecting the rotation direction, and the angle formed by an end portion of the shielding portion in the rotation direction with respect to the side surface of the reagent container may be larger than a second angle formed by an end portion of the shielding portion in a rotation radial direction with respect to a second side surface of the reagent container having a direction intersecting the rotation radial direction of the reagent storage.

The reagent container according to claim 1, in which
the side surface of the reagent container has a first side surface located on one side in a rotation direction of the reagent storage and a second side surface located on another side in the rotation direction,
a gap between the shielding portion and the side surface of the reagent container has a first gap between one end portion of the shielding portion and the first side surface in the rotation direction and a second gap between another end portion of the shielding portion and the second side surface in the rotation direction, and
the first gap and the second gap are configured to increase from the upper portion toward the lower portion of the shielding portion.

At the same height, the first gap and the second gap may be the same.

A lower end portion of the shielding portion may be in contact with a bottom surface of the reagent container.

A lower end portion of the shielding portion may be away upward from a bottom surface of the reagent container.

The shielding portion may contain a resin.

An automatic analyzer including:
a reagent storage that rotates; and
a reagent container installed in the reagent storage, in which
the reagent container includes:
   a shielding portion that partially shields an inner diameter side and an outer diameter side in the rotation inside the reagent container, and
   a gap between the shielding portion and a side surface of the reagent container is configured to increase from an upper portion toward a lower portion of the shielding portion.

### BRIEF DESCRIPTION OF THE DRAWINGS

FIG. 1 is a block diagram illustrating a configuration example of an automatic analyzer according to a first embodiment;
FIG. 2 is a diagram illustrating a configuration of an analysis mechanism illustrated in FIG. 1;
FIG. 3 is a side view illustrating a configuration example of a reagent container according to the first embodiment;
FIG. 4 is a perspective view illustrating a configuration example of the reagent container according to the first embodiment;
FIG. 5 is a front view illustrating a shielding portion of the reagent container according to the first embodiment;
FIG. 6 is a diagram illustrating an example of movement of a reagent in the reagent container according to the first embodiment;
FIG. 7 is a diagram illustrating an example of movement of a reagent in a reagent container according to a comparative example;
FIG. 8 is a front view illustrating a shielding portion of a reagent container according to a first modification of the first embodiment;
FIG. 9 is a front view illustrating a shielding portion of a reagent container according to a second modification of the first embodiment;
FIG. 10 is a front view illustrating a shielding portion of a reagent container according to a third modification of the first embodiment;
FIG. 11 is a front view illustrating a shielding portion of a reagent container according to a fourth modification of the first embodiment;
FIG. 12 is a front view illustrating a first shielding portion of a reagent container according to a second embodiment; and
FIG. 13 is a diagram illustrating an example of movement of a reagent in the reagent container according to the second embodiment.

### DETAILED DESCRIPTION

Hereinafter, an embodiment of an automatic analyzer will be described in detail with reference to the drawings. In the following description, components having substantially the same functions and configurations will be given the same reference numerals, and redundant description thereof will be made only when necessary.

### (First Embodiment)

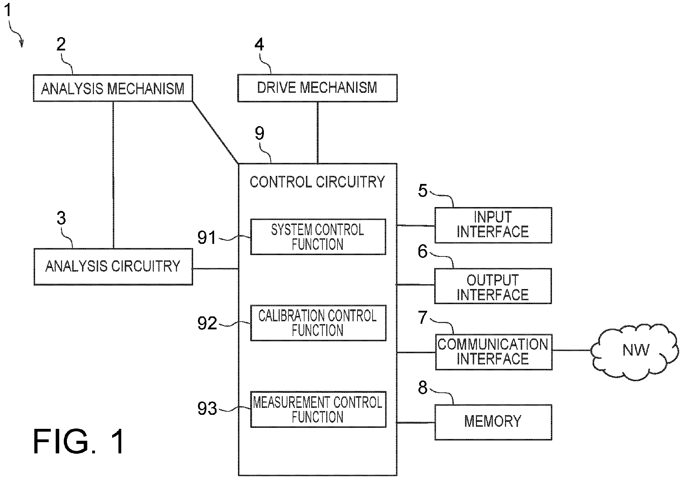

FIG. 1 is a block diagram illustrating a configuration example of an automatic analyzer 1 according to a first embodiment. The automatic analyzer 1 illustrated in FIG. 1 includes an analysis mechanism 2, an analysis circuitry 3, a drive mechanism 4, an input interface 5, an output interface 6, a communication interface 7, a memory 8, and a control circuitry 9.

The analysis mechanism 2 obtains a mixed solution (that is, reaction liquid) of a sample and a reagent by adding the reagent used in each test item set in the sample to a sample such as a standard sample (that is, calibrator) and a test sample. The analysis mechanism 2 measures the mixed solution of the sample and the reagent, and generates standard data and test data represented by, for example, absorbance or a scattered light amount. The standard data represents measurement data of absorbance, fluorescence intensity, or scattered light amount, or measurement data of light emission, phosphorescence, or a combination thereof for a standard sample in which the concentration of the detection target included in the standard sample is known. Furthermore, the test data represents measurement data of the absorbance, the fluorescence intensity, or the scattered light quantity for the test sample. Note that, in the following description, in a case where the standard sample and the test sample are expressed without distinction, these samples may be simply referred to as a "sample".

The analysis circuitry 3 is a processor that analyzes the standard data and the test data generated by the analysis mechanism 2 and generates calibration data, analysis data, and the like. The calibration data indicates, for example, a relationship between the standard data and a standard calibration curve set in advance for the standard sample. The standard calibration curve is, for example, a calibration curve with high measurement accuracy calculated by a reagent manufacturer using the standard sample. Furthermore, the analysis data is data obtained by analyzing the test data on the basis of the calibration data, and is represented as, for example, a concentration value and an activity value of an enzyme.

The analysis circuitry 3 executes an operation program stored in the memory 8 and realizes a function corresponding to the operation program to generate calibration data, analysis data, and the like. For example, the analysis circuitry 3 calculates calibration data on the basis of standard data obtained for a standard sample with absorbance or scattered light quantity that is known and with a concentration of zero, and a plurality of standard samples with absorbance or scattered light quantity that is known and with concentrations each of which is known, a standard calibration curve set in advance for these standard samples, a photometric timing set in advance, and the like. Furthermore, the analysis circuitry 3 generates analysis data on the basis of test data, calibration data of a test item corresponding to the test data, a photometric timing set in advance, and the like. The analysis circuitry 3 outputs the generated calibration data, analysis data, and the like to the control circuitry 9.

The drive mechanism 4 drives the analysis mechanism 2 under the control of the control circuitry 9. The drive mechanism 4 is implemented by, for example, a gear, a stepping motor, a belt conveyor, a lead screw, and the like.

The input interface 5 receives, for example, setting of an analysis parameter or the like of each test item related to the sample requested to be measured from the operator or via an in-hospital network NW. The input interface 5 is implemented by, for example, a mouse, a keyboard, a touch pad to which an instruction is input by touching the operation surface, and the like. The input interface 5 is connected to the control circuitry 9, converts an operation instruction input from the user into an electric signal, and outputs the electric signal to the control circuitry 9. Note that, in the present specification, the input interface 5 is not limited to the interface including physical operation components such as a mouse and a keyboard. For example, also an electric signal processing circuitry that receives an electric signal corresponding to an operation instruction input from an external input device provided separately from the automatic analyzer 1 and outputs the electric signal to the control circuitry 9 is included in examples of the input interface 5.

The output interface 6 is connected to the control circuitry 9 and outputs the signal supplied from the control circuitry 9. The output interface 6 is implemented by, for example, a display circuitry, a print circuitry, and the like. Examples of the display circuitry include a CRT display, a liquid crystal display, an organic EL display, an LED display, and a plasma display. Note that the display circuitry also includes a processing circuitry that converts data representing a display target into a video signal and outputs the video signal to the outside. The print circuitry includes, for example, a printer. Note that an output circuitry that outputs data representing a printing target to the outside is also included in the print circuitry.

The communication interface 7 is connected to, for example, the in-hospital network NW. The communication interface 7 performs data communication with a hospital information system (HIS) via the in-hospital network NW. Note that the communication interface 7 may perform data communication with the HIS via a laboratory information system (LIS) connected to the in-hospital network NW.

The memory 8 is a non-transitory storage device that stores various types of information, and is, for example, a hard disk drive (HDD), an optical disc, a solid-state drive (SSD), an integrated circuitry storage device, or the like. The memory 8 stores, for example, a control program for controlling the automatic analyzer 1 and various pieces of data used to execute the control program. The memory 8 may be a drive device that reads and writes various types of information from and to a portable storage medium such as a compact disc (CD), a digital versatile disc (DVD), or a flash memory, a semiconductor memory device such as a random-access memory (RAM), or the like, in addition to the HDD, the SSD, and the like. Note that the memory 8 need not necessarily be implemented by a single storage device. For example, the memory 8 may be implemented by a plurality of storage devices.

More specifically, the memory 8 stores an operation program executed by the analysis circuitry 3 and an operation program executed by the control circuitry 9. The memory 8 stores calibration curve information related to the reagent held in the analysis mechanism 2. The calibration curve information includes data on a standard calibration curve set in advance for a reagent for each test item. The calibration curve information is provided from a reagent manufacturer in units of lots of reagents, for example, via the communication interface 7. Note that the calibration curve information may be provided from a reagent manufacturer together with a reagent, for example, and may be input by the user from the input interface 5.

The control circuitry 9 is a processor that functions as a center of the automatic analyzer 1. The control circuitry 9 realizes a function corresponding to the operation program by executing the operation program stored in the memory 8. Note that the control circuitry 9 may include a storage area that stores at least part of the data stored in the memory 8.

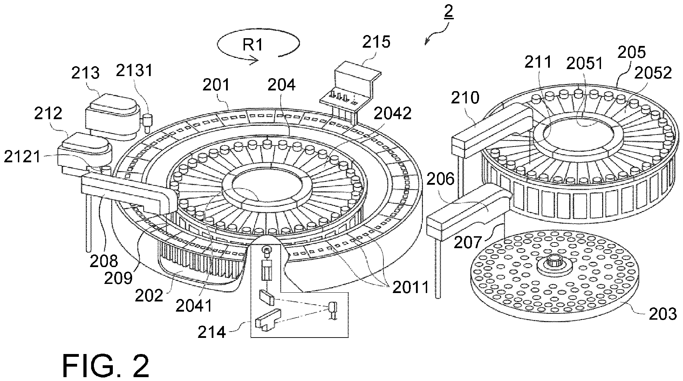

FIG. 2 is a schematic diagram illustrating an example of a configuration of the analysis mechanism 2 illustrated in FIG. 1. The analysis mechanism 2 illustrated in FIG. 2 includes a reaction disk 201, a thermostatic unit 202, a sample disk 203, a first reagent storage 204, and a second reagent storage 205.

The reaction disk 201 conveys a reaction container 2011 along a predetermined path. Specifically, the reaction disk 201 holds a plurality of the reaction containers 2011 arranged in a ring shape. The reaction disk 201 is alternately rotated and stopped at predetermined time intervals by the drive mechanism 4.

For example, the reaction container 2011 rotationally moves in the direction of an arrow R1 in FIG. 2 every one cycle time, and stops at a stop position different from the position before the movement. For example, the reaction container 2011 rotationally moves in the R1 direction every one cycle time by the rotational drive of the reaction disk 201, and stops at the position of the reaction container 2011 adjacent to the reaction container in the R1 direction with respect to the reaction container 2011 located at an angle of 90° in the R1 direction from the position before the movement. Then, the reaction container 2011 stops at the same stop position every one round time, which is longer than one cycle time.

The stop positions of the reaction container 2011 include a sample discharge position, a first reagent discharge position, a second reagent discharge position, a first stirring position, a second stirring position, and a cleaning position to be described later.

The reaction container 2011 is formed of, for example, glass. The reaction container 2011 has a quadrangular prism shape and has an opening in the upper portion. Among first to fourth side walls forming the quadrangular prism, the light emitted from a light source provided in a photometric unit 214 is incident from the outer surface of the first side wall. Among the first to fourth side walls, the light incident from the outer surface of the first side wall is emitted from the outer surface of the second side wall facing the first side wall.

The thermostatic unit 202 stores a heating medium set at a predetermined temperature. The thermostatic unit 202 raises the temperature of the mixed solution contained in the reaction container 2011 by immersing the reaction container 2011 in the stored heating medium.

The sample disk 203 holds a plurality of sample containers containing samples. The sample disk 203 is rotated and stopped every one cycle time by the drive mechanism 4.

The first reagent storage 204 refrigerates a plurality of reagent containers 2042 containing a standard sample and a first reagent that reacts with a predetermined component included in a test sample. The first reagent may be, for example, a buffer solution containing bovine serum albumin (BSA) or the like. A reagent label is attached to the reagent container 2042. An optical mark representing reagent information is printed on the reagent label. As the optical mark, for example, an optional pixel code such as a one-dimensional pixel code and a two-dimensional pixel code is used. The reagent information is information on a reagent contained in the reagent container 2042, and includes, for example, a reagent name, a reagent manufacturer code, a reagent item code, a bottle type, a bottle size, a volume, a production lot number, a valid period, and the like.

Furthermore, the first reagent storage 204 refrigerates a plurality of standard sample containers containing standard samples. The standard sample containers may contain standard samples of the same component having different concentrations. Note that the standard sample container may be held on the sample disk 203.

In the first reagent storage 204, a reagent rack 2041 is rotatably provided. The reagent rack 2041 holds a plurality of the reagent containers 2042 and a plurality of standard sample containers arranged in an annular shape. The reagent rack 2041 is rotated and stopped every one cycle time by the drive mechanism 4. Furthermore, in the first reagent storage 204, a reader (not illustrated) that reads reagent information from a reagent label attached to the reagent container 2042 is provided. The read reagent information is stored in the memory 8.

A first reagent suction position is set at a predetermined position on the first reagent storage 204. The first reagent suction position is provided, for example, at a position where the rotation trajectory of a first reagent dispensing probe 209 intersects with the movement trajectory of the opening of the reagent container 2042 and the standard sample container arranged in an annular shape in the reagent rack 2041.

The second reagent storage 205 refrigerates a plurality of reagent containers 2052 containing the second reagent paired with the first reagent of the two reagent systems. The second reagent may be, for example, a solution containing a predetermined antigen or antibody contained in the sample and an insoluble carrier, for example, a carrier particle on which an antigen or antibody bound or separated by a specific antigen-antibody reaction is immobilized. An enzyme, a substrate, an aptamer, or a receptor may be bound or separated by a specific reaction. In the second reagent storage 205, a reagent rack 2051 is rotatably provided.

The reagent rack 2051 holds a plurality of the reagent containers 2052 arranged in an annular shape. Note that, in the second reagent storage 205, a standard sample container containing a standard sample may be refrigerated. The reagent rack 2051 is rotated and stopped every one cycle time by the drive mechanism 4. Furthermore, in the second reagent storage 205, a reader (not illustrated) that reads reagent information from a reagent label attached to the reagent container 2052 is provided. The read reagent information is stored in the memory 8.

A second reagent suction position is set at a predetermined position on the second reagent storage 205. The second reagent suction position is provided, for example, at a position where the rotation trajectory of a second reagent dispensing probe 211 intersects with the movement trajectory of the opening of the reagent container 2052 arranged in an annular shape in the reagent rack 2051.

Furthermore, the analysis mechanism 2 illustrated in FIG. 2 includes a sample dispensing arm 206, a sample dispensing probe 207, a first reagent dispensing arm 208, the first reagent dispensing probe 209, a second reagent dispensing arm 210, the second reagent dispensing probe 211, a first stirring unit 212, a second stirring unit 213, the photometric unit 214, and a cleaning unit 215. The sample dispensing probe 207 is an example of a first dispensing probe. The first reagent dispensing probe 209 and the second reagent dispensing probe 211 are examples of a second dispensing probe.

The sample dispensing arm 206 is provided between the reaction disk 201 and the sample disk 203. The sample dispensing arm 206 is provided to be movable up and down in the vertical direction and to be rotatable in the horizontal direction by the drive mechanism 4. The sample dispensing arm 206 holds the sample dispensing probe 207 at one end.

The sample dispensing probe 207 rotates along an arc-shaped rotation trajectory as the sample dispensing arm 206 rotates. The opening of the sample container held by the sample disk 203 is located on the rotation trajectory. Furthermore, a sample discharge position for discharging the sample sucked by the sample dispensing probe 207 to the reaction container 2011 is provided on the rotation trajectory of the sample dispensing probe 207. The sample discharge position corresponds to an intersection point between the rotation trajectory of the sample dispensing probe 207 and the movement trajectory of the reaction container 2011 held by the reaction disk 201.

The sample dispensing probe 207 is driven by the drive mechanism 4 and moves in the vertical direction immediately above the opening of the sample container held by the sample disk 203 or at the sample discharge position. Furthermore, the sample dispensing probe 207 dispenses a sample according to the operation of a dispensing pump connected to the sample dispensing probe 207. That is, the sample dispensing probe 207 sucks the sample from the sample container located immediately below by the suction operation of the dispensing pump according to the control of the dispensing pump by the control circuitry 9. Furthermore, the sample dispensing probe 207 discharges the sucked sample to the reaction container 2011 located immediately below the sample discharge position by the discharge operation of the dispensing pump according to the control of the dispensing pump by the control circuitry 9.

The first reagent dispensing arm 208 is provided in the vicinity of the outer periphery of the first reagent storage 204. The first reagent dispensing arm 208 is provided to be movable up and down in the vertical direction and to be rotatable in the horizontal direction by the drive mechanism 4. The first reagent dispensing arm 208 holds the first reagent dispensing probe 209 at one end.

The first reagent dispensing probe 209 rotates along an arc-shaped rotation trajectory as the first reagent dispensing arm 208 rotates. The first reagent suction position is provided on this rotation trajectory. Furthermore, a first reagent discharge position for discharging the first reagent or the standard sample sucked by the first reagent dispensing probe 209 to the reaction container 2011 is set on the rotation trajectory of the first reagent dispensing probe 209. The first reagent discharge position corresponds to an intersection point between the rotation trajectory of the first reagent dispensing probe 209 and the movement trajectory of the reaction container 2011 held by the reaction disk 201.

The first reagent dispensing probe 209 is driven by the drive mechanism 4 and moves in the vertical direction at the first reagent suction position or the first reagent discharge position on the rotation trajectory. The first reagent dispensing probe 209 dispenses the first reagent or the standard sample according to the operation of the first reagent pump connected to the first reagent dispensing probe 209. That is, the first reagent dispensing probe 209 sucks the first reagent or the standard sample from the reagent container 2042 located immediately below the first reagent suction position by the suction operation of the first reagent pump according to the control of the first reagent pump by the control circuitry 9. Furthermore, the first reagent dispensing probe 209 discharges the sucked first reagent or standard sample to the reaction container 2011 located immediately below the first reagent discharge position by the discharge operation of the first reagent pump according to the control of the first reagent pump by the control circuitry 9.

The second reagent dispensing arm 210 is provided in the vicinity of the outer periphery of the first reagent storage 204. The second reagent dispensing arm 210 is provided to be movable up and down in the vertical direction and to be rotatable in the horizontal direction by the drive mechanism 4. The second reagent dispensing arm 210 holds the second reagent dispensing probe 211 at one end.

The second reagent dispensing probe 211 rotates along an arc-shaped rotation trajectory as the second reagent dispensing arm 210 rotates. The second reagent suction position is provided on this rotation trajectory. Furthermore, a second reagent discharge position for discharging the second reagent sucked by the second reagent dispensing probe 211 to the reaction container 2011 is set on the rotation trajectory of the second reagent dispensing probe 211. The second reagent discharge position corresponds to an intersection point between the rotation trajectory of the second reagent dispensing probe 211 and the movement trajectory of the reaction container 2011 held by the reaction disk 201.

The second reagent dispensing probe 211 is driven by the drive mechanism 4 and moves in the vertical direction at the second reagent suction position or the second reagent discharge position on the rotation trajectory. The second reagent dispensing probe 211 dispenses the second reagent according to the operation of the second reagent pump connected to the second reagent dispensing probe 211. That is, the second reagent dispensing probe 211 sucks the second reagent from the reagent container 2052 located immediately below the second reagent suction position by the suction operation of the second reagent pump according to the control of the second reagent pump by the control circuitry 9. Furthermore, the second reagent dispensing probe 211 discharges the sucked second reagent to the reaction container 2011 located immediately below the second reagent discharge position by the discharge operation of the second reagent pump according to the control of the second reagent pump by the control circuitry 9.

The first stirring unit 212 is provided in the vicinity of the outer periphery of the reaction disk 201. The first stirring unit 212 includes a first stirring arm 2121 and a first stirrer provided at the distal end of the first stirring arm 2121. The first stirring unit 212 stirs the standard sample and the first reagent contained in the reaction container 2011 located at the first stirring position on the reaction disk 201 with the first stirrer. Furthermore, the first stirring unit 212 stirs the sample and the first reagent contained in the reaction container 2011 located at the first stirring position on the reaction disk 201 with the first stirrer.

The second stirring unit 213 is provided in the vicinity of the outer periphery of the reaction disk 201. The second stirring unit 213 includes a second stirring arm 2131 and a second stirrer provided at the distal end of the second stirring arm 2131. The second stirring unit 213 stirs the standard sample, the first reagent, and the second reagent contained in the reaction container 2011 located at the second stirring position on the reaction disk 201 with the second stirrer. Furthermore, the second stirring unit 213 stirs the sample, the first reagent, and the second reagent contained in the reaction container 2011 located at the second stirring position with the second stirrer.

The photometric unit 214 optically measures a mixed solution of the sample, the first reagent, and the second reagent discharged into the reaction container 2011 at a photometric position. More specifically, the photometric unit 214 performs photometry of the mixed solution held in the reaction container 2011 that has passed through the photometric position by the rotation of the reaction disk 201 by the drive mechanism 4. The photometric unit 214 includes a light source and a photodetector. The photometric unit 214 emits light from the light source under the control of the control circuitry 9. The emitted light is incident from the first side wall of the reaction container 2011 and emitted from the second side wall facing the first side wall. The photometric unit 214 detects the light emitted from the reaction container 2011 with a photodetector.

For example, the photodetector is disposed on the optical axis of the light emitted from the light source to the reaction container 2011. The photodetector detects light transmitted through the mixed solution of the standard sample, the first reagent, and the second reagent in the reaction container 2011, and generates standard data represented by absorbance on the basis of the intensity of the detected light. Furthermore, the photodetector detects light transmitted through the mixed solution of the test sample, the first reagent, and the second reagent in the reaction container 2011, and generates test data represented by absorbance on the basis of the intensity of the detected light. The photometric unit 214 outputs the generated standard data and test data to the analysis circuitry 3.

The cleaning unit 215 cleans the reaction container 2011 located at the cleaning position and subjected to the measurement. More specifically, the cleaning unit 215 cleans the inside of the reaction container 2011 in which the measurement of the mixed solution has been completed by the photometric unit 214.

The control circuitry 9 illustrated in FIG. 1 is a circuitry that controls the entire operation of the automatic analyzer 1 in accordance with an electric signal of an input operation input from the input interface 5. For example, the control circuitry 9 has a system control function 91, a calibration control function 92, and a measurement control function 93.

Here, for example, each processing function executed by the system control function 91, the calibration control function 92, and the measurement control function 93, which are components of the control circuitry 9 illustrated in FIG. 1, is recorded in the memory 8 in the form of a program executable by a computer. The control circuitry 9 is, for example, a processor. The processor constituting the control circuitry 9 reads each program from the memory 8 and executes the program to implement the function corresponding to the read program. In other words, the control circuitry 9 that has read each program has the corresponding function illustrated in the control circuitry 9 in FIG. 1.

Note that FIG. 1 illustrates a case where each processing function of the system control function 91, the calibration control function 92, and the measurement control function 93 is realized by the single control circuitry 9, but the embodiment is not limited thereto. For example, the control circuitry 9 may be configured by combining a plurality of independent processors together, and each processor may realize the corresponding processing function by executing the corresponding program. Furthermore, each processing function of the control circuitry 9 may be realized while being appropriately distributed or integrated into one or a plurality of control circuitries.

The system control function 91 is a function of integrally controlling each unit in the automatic analyzer 1 on the basis of input information input from the input interface 5.

The calibration control function 92 is a function of controlling the analysis mechanism 2 and the drive mechanism 4 so as to generate standard data. Specifically, the control circuitry 9 executes the calibration control function 92 at a predetermined timing. The predetermined timing is, for example, at the time of initial setting, at the time of device activation, at the time of maintenance, and when an instruction to start calibration operation is input from the user.

When the calibration control function 92 is executed, the control circuitry 9 controls the analysis mechanism 2 and the drive mechanism 4. By controlling the analysis mechanism 2 and the drive mechanism 4, standard data is generated in the analysis mechanism 2. Specifically, for example, by being driven by the drive mechanism 4, the first reagent dispensing probe 209 of the analysis mechanism 2 sucks the standard sample from the first reagent storage 204, and discharges the sucked standard sample to the reaction container 2011. The first reagent dispensing probe 209 sucks the first reagent from the first reagent storage 204, and discharges the sucked first reagent to the reaction container 2011 from which the standard sample is discharged. The first stirring unit 212 stirs a solution obtained by adding the first reagent to the standard sample.

The second reagent dispensing probe 211 sucks the second reagent from the second reagent storage 205, and discharges the sucked second reagent to the mixed solution in which the standard sample and the first reagent are mixed. The second stirring unit 213 stirs the solution obtained by adding the second reagent to the mixed solution. The photometric unit 214 generates standard data by optically measuring a mixed solution obtained by stirring the standard sample, the first reagent, and the second reagent. The photometric unit 214 outputs the generated standard data to the analysis circuitry 3. The photometric unit 214 repeats the measurement of the mixed solution a preset number of times at a preset cycle, and outputs the generated standard data to the analysis circuitry 3. The analysis mechanism 2 repeats the above operation for a standard sample having a plurality of concentrations set in advance, and outputs the generated standard data to the analysis circuitry 3.

The measurement control function 93 is a function of controlling the analysis mechanism 2 and the drive mechanism 4 so as to generate test data. Specifically, the control circuitry 9 executes the measurement control function 93 in accordance with a predetermined instruction. The predetermined instruction is, for example, a measurement operation start instruction input from the user, an instruction indicating that a preset time has been reached, or the like.

When the measurement control function 93 is executed, the control circuitry 9 controls the analysis mechanism 2 and the drive mechanism 4. By controlling the analysis mechanism 2 and the drive mechanism 4, test data is generated in the analysis mechanism 2. Specifically, for example, by being driven by the drive mechanism 4, the sample dispensing probe 207 of the analysis mechanism 2 sucks the test sample from the sample disk 203, and discharges the sucked test sample to the reaction container 2011. The first reagent dispensing probe 209 sucks the first reagent from the first reagent storage 204, and discharges the sucked first reagent to the reaction container 2011 from which the test sample is discharged. When the first reagent is sucked by the first reagent dispensing probe 209, the control circuitry 9 detects the liquid level of the first reagent in the reagent container 2042 on the basis of the contact state of the first reagent dispensing probe 209 with the reagent in the reagent container 2042. For example, the control circuitry 9 detects the liquid level of the first reagent on the basis of a change in electrical characteristics (for example, capacitance or resistance value) when the lower end portion of the first reagent dispensing probe 209 comes into contact with the first reagent. Then, the control circuitry 9 causes the drive mechanism 4 to lower the first reagent dispensing probe 209 until the liquid level of the first reagent is detected, and causes the first reagent dispensing probe 209 to suck the first reagent. The first stirring unit 212 stirs a solution obtained by adding the first reagent to the test sample.

The second reagent dispensing probe 211 sucks the second reagent from the second reagent storage 205, and discharges the sucked second reagent to the mixed solution in which the test sample and the first reagent are mixed. Similarly to the case of the suction of the first reagent by the first reagent dispensing probe 209, when the second reagent is sucked by the second reagent dispensing probe 211, the control circuitry 9 causes the drive mechanism 4 to lower the second reagent dispensing probe 211 until the liquid level of the second reagent is detected, and causes the second reagent dispensing probe 211 to suck the second reagent. The second stirring unit 213 stirs the solution obtained by adding the second reagent to the mixed solution. The photometric unit 214 generates test data by optically measuring a mixed solution obtained by stirring the test sample, the first reagent, and the second reagent. The photometric unit 214 outputs the generated test data to the analysis circuitry 3. The photometric unit 214 repeats the measurement of the mixed solution a preset number of times at a preset cycle, and outputs the generated test data to the analysis circuitry 3.

The analysis circuitry 3 is a processor that analyzes the standard data and the test data generated by the analysis mechanism 2 and generates calibration data, analysis data, and the like. The calibration data indicates, for example, a relationship between the standard data and a standard calibration curve set in advance for the standard sample. The standard calibration curve is, for example, a calibration curve with high measurement accuracy calculated by a reagent manufacturer using the standard sample. Furthermore, the analysis data is data obtained by analyzing the test data on the basis of the calibration data, and is represented as, for example, a concentration value and an activity value of an enzyme.

The analysis circuitry 3 executes an operation program stored in the memory 8 and realizes a function corresponding to the operation program to generate calibration data, analysis data, and the like. For example, the analysis circuitry 3 calculates calibration data on the basis of standard data obtained for a standard sample with absorbance or scattered light quantity that is known and with a concentration of zero, and a plurality of standard samples with absorbance or scattered light quantity that is known and with concentrations each of which is known, a standard calibration curve set in advance for these standard samples, a photometric timing set in advance, and the like. Furthermore, the analysis circuitry 3 generates analysis data on the basis of test data, calibration data of a test item corresponding to the test data, a photometric timing set in advance, and the like. The analysis circuitry 3 outputs the generated calibration data, analysis data, and the like to the control circuitry 9.

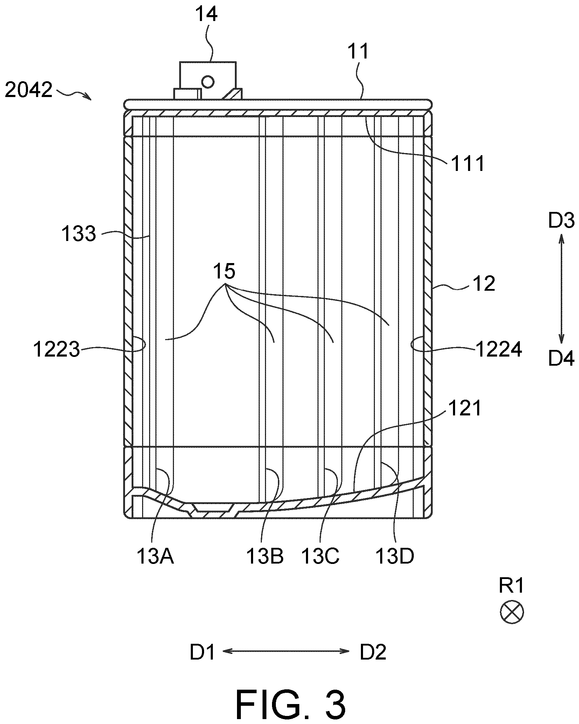

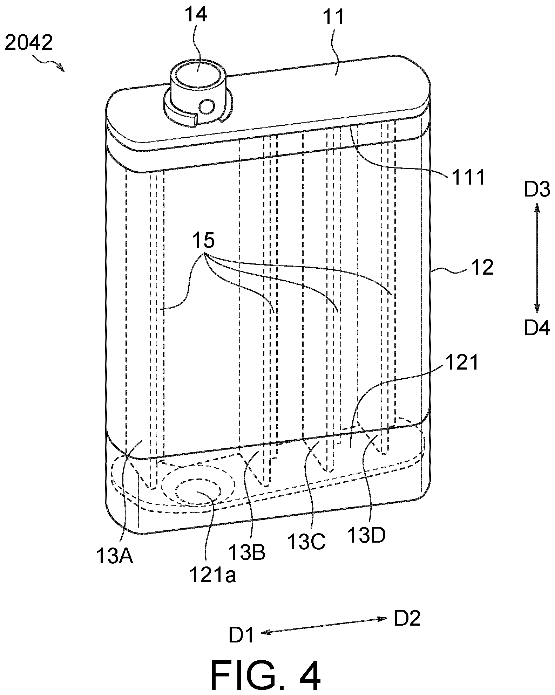

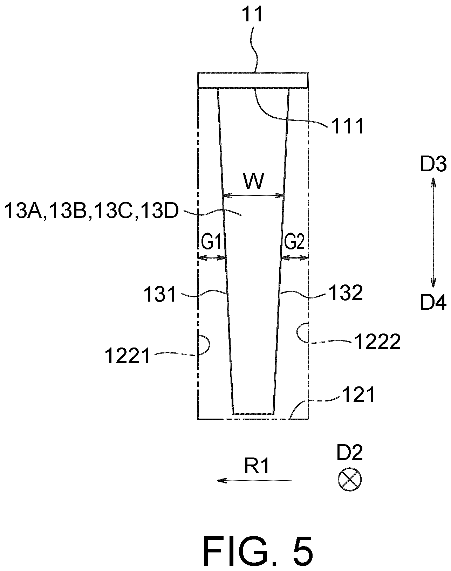

Next, details of the reagent container 2042 according to the first embodiment will be described. Note that the configuration of the reagent container 2042 installed in the first reagent storage 204 will be described below, and the configuration of the reagent container 2052 installed in the second reagent storage 205 may be similar to the reagent container 2042. FIG. 3 is a side view illustrating a configuration example of the reagent container 2042 according to the first embodiment. FIG. 4 is a perspective view illustrating a configuration example of the reagent container 2042 according to the first embodiment. FIG. 5 is a front view illustrating shielding portions 13A, 13B, 13C, and 13D of the reagent container 2042 according to the first embodiment. In FIGS. 3 to 5, a D1 direction is defined as the inner side in the rotation radial direction of the first reagent storage 204, that is, the inner diameter side. Furthermore, a D2 direction is defined as the outer side in the rotation radial direction of the first reagent storage 204, that is, the outer diameter side. Furthermore, a D3 direction is defined as upward. Furthermore, a D4 direction is defined as downward.

As illustrated in FIGS. 3 and 4, the reagent container 2042 includes a plate-like lid portion 11 in which an outlet 14 of the first reagent is formed, and a main body portion 12 having the lid portion 11 fixed to the upper portion thereof. The reagent container 2042 is installed in the first reagent storage 204 that rotates in the automatic analyzer 1. The reagent container 2042 includes four shielding portions 13A, 13B, 13C, and 13D configured by a first shielding portion 13A, a second shielding portion 13B, a third shielding portion 13C, and a fourth shielding portion 13D. Note that the number of the shielding portions 13A, 13B, 13C, and 13D is not limited to four. For example, the number of the shielding portions may be one or more and three or less, or may be five or more.

The shielding portions 13A, 13B, 13C, and 13D partially shield the inner diameter side and the outer diameter side in the rotation of the first reagent storage 204 inside the reagent container 2042. The first shielding portion 13A is disposed on the innermost diameter side D1 of the four shielding portions 13A, 13B, 13C, and 13D. The first shielding portion 13A is disposed on the inner diameter side D1 with respect to the outlet 14. The first shielding portion 13A partially shields a region on the inner diameter side D1 with respect to the first shielding portion 13A and a region on the outer diameter side D2 with respect to the first shielding portion 13A in the reagent container 2042. The second shielding portion 13B is disposed on the outer diameter side D2 of the first shielding portion 13A. The second shielding portion 13B is disposed on the outer diameter side D2 with respect to the outlet 14. The second shielding portion 13B partially shields a region on the inner diameter side D1 with respect to the second shielding portion 13B and a region on the outer diameter side D2 with respect to the second shielding portion 13B in the reagent container 2042. The third shielding portion 13C is disposed on the outer diameter side D2 of the second shielding portion 13B. The third shielding portion 13C partially shields a region on the inner diameter side D1 with respect to the third shielding portion 13C and a region on the outer diameter side D2 with respect to the third shielding portion 13C in the reagent container 2042. The fourth shielding portion 13D is disposed on the outer diameter side D2 of the third shielding portion 13C. The fourth shielding portion 13D partially shields a region on the inner diameter side D1 with respect to the fourth shielding portion 13D and a region on the outer diameter side D2 with respect to the fourth shielding portion 13D in the reagent container 2042.

Here, the shielding portions 13A, 13B, 13C, and 13D are provided to reduce bubbles generated in a first reagent R. However, if gaps G1 and G2 between the shielding portions 13A, 13B, 13C, and 13D and side surfaces 1221 and 1222 of the reagent container are not appropriately held, there is a possibility that bubbles are generated in the first reagent R due to the structure of the shielding portions 13A, 13B, 13C, and 13D.

Therefore, in order to suppress generation of bubbles in the first reagent R due to the structure of the shielding portions 13A, 13B, 13C, and 13D, in the first embodiment, the gaps G1 and G2 between the shielding portions 13A, 13B, 13C, and 13D and the side surfaces 1221 and 1222 of the reagent container are appropriately held. Specifically, as illustrated in FIG. 5, the gaps G1 and G2 between the shielding portions 13A, 13B, 13C, and 13D and the side surfaces 1221 and 1222 of the reagent container is configured to increase from the upper portion to the lower portion of the shielding portions 13A, 13B, 13C, and 13D. More specifically, the gap G1 between one end portion 131 of the shielding portions 13A, 13B, 13C, and 13D in the rotation direction R1 of the first reagent storage 204 and one side surface 1221 (that is, a first side surface) of the reagent container 2042 in the rotation direction R1 of the first reagent storage 204 facing the end portion 131 is configured to increase from the upper portion to the lower portion of the shielding portions 13A, 13B, 13C, and 13D. Furthermore, the gap G2 between the other end portion 132 of the shielding portions 13A, 13B, 13C, and 13D in the rotation direction R1 of the first reagent storage 204 and the other side surface 1222 (that is, a second side surface) of the reagent container 2042 in the rotation direction R1 of the first reagent storage 204 facing the end portion 132 is configured to increase from the upper portion to the lower portion of the shielding portions 13A, 13B, 13C, and 13D. At the same height, the sizes of the two gaps G1 and G2 may be the same as each other.

As illustrated in FIG. 3, the shielding portions 13A, 13B, 13C, and 13D are provided on an inner upper surface 111 (that is, the lower surface of the lid portion 11) of the reagent container 2042 so as to extend to the downward direction D4, which is a direction toward a bottom surface 121 of the reagent container 2042. The shielding portions 13A, 13B, 13C, and 13D are integrally molded with the lid portion 11 using, for example, a mold.

The outlet 14 described above is provided at a position on the inner diameter side D1 on the inner upper surface 111 of the reagent container 2042 so as to penetrate the inner upper surface 111. As illustrated in FIGS. 3 and 4, the bottom surface 121 of the reagent container 2042 is inclined so as to be away from the inner upper surface 111 as approaching the outlet 14 in the rotation radial direction of the first reagent storage 204. Since the bottom surface 121 of the reagent container 2042 is inclined so as to be away from the inner upper surface 111 as approaching the outlet 14, it is possible to reduce a dead volume, which is a space of the reagent container 2042 in which the first reagent is not sucked and is accumulated. As illustrated in FIG. 4, the bottom surface 121 is provided with a recess 121a facing the outlet 14, so that the dead volume can be further reduced.

As described above, the four shielding portions 13A, 13B, 13C, and 13D are disposed at intervals in the rotation radial direction of the first reagent storage 204. The first shielding portion 13A and the second shielding portion 13B close to the outlet 14 among the four shielding portions 13A, 13B, 13C, and 13D extend to the downward direction D4 (that is, the bottom surface 121 side) more than the third shielding portion 13C and the fourth shielding portion 13D far from the outlet 14 among the four shielding portions 13A, 13B, 13C, and 13D. Note that the third shielding portion 13C closer to the outlet 14 than the fourth shielding portion 13D extends to the downward direction D4 more than the fourth shielding portion 13D. The lower end portions of the shielding portions 13A, 13B, 13C, and 13D may be in contact with the bottom surface 121 or may be away from the bottom surface 121 in the upward direction D3 side.

As illustrated in FIG. 5, a width W of the shielding portions 13A, 13B, 13C, and 13D in the rotation direction R1 of the first reagent storage 204 are reduced from the upper portion to the lower portion of the shielding portions 13A, 13B, 13C, and 13D. In the example illustrated in FIG. 5, the width W of the shielding portions 13A, 13B, 13C, and 13D is continuously reduced from the upper portion to the lower portion of the shielding portions 13A, 13B, 13C, and 13D. More specifically, the end portions 131 and 132 of the shielding portions 13A, 13B, 13C, and 13D in the rotation direction R1 of the first reagent storage 204 have linear shapes inclined with respect to the side surfaces 1221 and 1222 of the reagent container. That is, the shielding portions 13A, 13B, 13C, and 13D have a trapezoidal shape (that is, a wedge shape) when viewed from the rotation radial direction of the first reagent storage 204.

The angle (hereinafter, also referred to as a first inclination angle) formed by the end portions 131 and 132 of the shielding portions 13A, 13B, 13C, and 13D with respect to the side surfaces 1221 and 1222 of the reagent container in the rotation direction R1 of the first reagent storage 204 may be 1.5° or more. The first inclination angle is preferably 2° or more, or more preferably 3° or more.

The first inclination angle is larger than a second inclination angle formed by the end portion 133 of the shielding portions 13A, 13B, 13C, and 13D in the rotation radial direction with respect to side surfaces (that is, second side surfaces of the reagent container) 1223 and 1224 having a direction intersecting the rotation radial direction of the first reagent storage 204. The side surfaces 1223 and 1224 having directions intersecting with the rotation radial direction connect the side surfaces 1221 and 1222 having directions intersecting with the rotation direction R1. In the example illustrated in FIG. 3, the second inclination angle is almost 0°. The first inclination angle can also be referred to as a gradient of the shielding portions 13A, 13B, 13C, and 13D in the width direction. The second inclination angle can also be referred to as a gradient of the shielding portions 13A, 13B, 13C, and 13D in the thickness direction.

As illustrated in FIG. 3, the reagent container 2042 further includes a reinforcing portion 15 that is connected to the shielding portions 13A, 13B, 13C, and 13D and reinforces the shielding portions 13A, 13B, 13C, and 13D. In the example illustrated in FIG. 3, the reinforcing portion 15 protrudes toward the outer diameter side D2 from the central position of the shielding portions 13A, 13B, 13C, and 13D in the rotation direction R1. The reinforcing portion 15 may protrude toward the inner diameter side D1 from the central position of the shielding portions 13A, 13B, 13C, and 13D in the rotation direction R1.

Each of the lid portion 11 and the main body portion 12 provided with the shielding portions 13A, 13B, 13C, and 13D may be formed by, for example, resin molding using a mold.

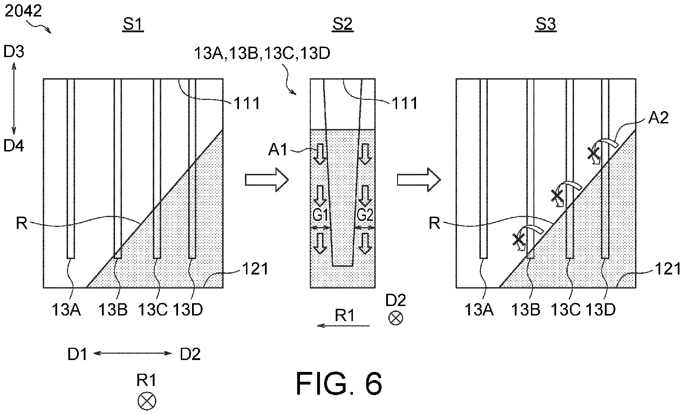

Next, an example of movement of the reagent in the reagent container 2042 configured as described above will be described. FIG. 6 is a diagram illustrating an example of movement of a reagent in the reagent container 2042 according to the first embodiment.

When the reagent container 2042 installed in the first reagent storage 204 is moved to the first suction position, the drive mechanism 4 rotates the first reagent storage 204 in the rotation direction R1. When the first reagent storage 204 is rotated, a centrifugal force due to the rotation of the first reagent storage 204 acts on the first reagent R in the reagent container 2042. When the centrifugal force acts, the first reagent R in the reagent container 2042 is moved to the outer diameter side D2 of the reagent container 2042 as illustrated in FIG. 6 (step S1).

When the first reagent storage 204 reaches the first suction position, the drive mechanism 4 stops the rotation of the first reagent storage 204. When the rotation of the first reagent storage 204 is stopped, the centrifugal force due to the rotation of the first reagent storage 204 does not act on the first reagent R in the reagent container 2042. When the centrifugal force no longer acts on the first reagent R, the first reagent R that has been moved to the outer diameter side D2 of the reagent container 2042 tends to return to the inner diameter side D1.

At this time, since the gaps G1 and G2 between the shielding portions 13A, 13B, 13C, and 13D and the side surfaces 1221 and 1222 of the reagent container increase from the upper portion to the lower portion of the shielding portions 13A, 13B, 13C, and 13D, as indicated by an arrow A1 in FIG. 6, the first reagent R located on the downward direction D4 side in which the gaps G1 and G2 are wide returns to the inner diameter side D1 earlier than the first reagent R located on the upward direction D3 side in which the gaps G1 and G2 are narrow (step S2).

When the first reagent R on the downward direction D4 side first returns to the inner diameter side D1, the first reagent can smoothly return to the inner diameter side D1. As a result, it possible to suppress the occurrence of entrainment in the first reagent R on the upward direction D3 side (step S3). Note that an arrow A2 superimposed with a symbol "×" in FIG. 6 indicates that the first reagent R indicated by the arrow A2 is prevented from being entrained. Note that the shielding portions 13A, 13B, 13C, and 13D may also suppress the first reagent R from being entrained when the first reagent storage 204 rotates from the stopped state. Since the entrainment of the first reagent R can be suppressed, bubbles generated in the first reagent R, that is, air bubbles can be reduced.

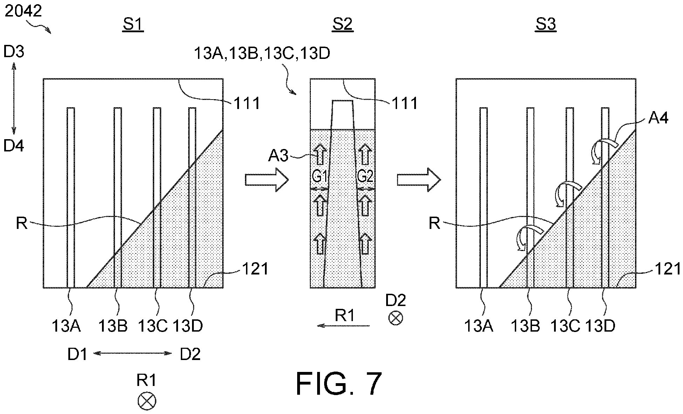

FIG. 7 is a diagram illustrating an example of movement of a reagent in the reagent container 2042 according to a comparative example. On the other hand, if the gaps G1 and G2 between the shielding portions 13A, 13B, 13C, and 13D and the side surfaces 1221 and 1222 of the reagent container decrease from the upper portion to the lower portion of the shielding portions 13A, 13B, 13C, and 13D, as indicated by an arrow A3 in FIG. 7, the first reagent R on the upward direction D3 side in which the gaps G1 and G2 are wide first returns to the inner diameter side D1 (step S2). When the first reagent R on the upward direction D3 side first returns to the inner diameter side D1, the first reagent R on the upward direction D3 side is entrained as indicated by an arrow A4 in FIG. 7 (step S3). When the first reagent R is entrained, bubbles are generated in the first reagent R.

As described above, in the first embodiment, the gaps G1 and G2 between the shielding portions 13A, 13B, 13C, and 13D and the side surfaces 1221 and 1222 of the reagent container is configured to increase from the upper portion to the lower portion of the shielding portions 13A, 13B, 13C, and 13D.

With this configuration, when the first reagent R moves in accordance with rotation or stop of the first reagent storage 204, the first reagent R on the downward direction D4 side can be moved first to suppress the entrainment of the first reagent R. Since the entrainment of the first reagent R can be suppressed, bubbles generated in the first reagent R can be appropriately reduced. Since the generation of bubbles can be appropriately reduced, the liquid level of the first reagent R can be appropriately detected by the measurement control function 93 using the first reagent dispensing probe 209. Since the liquid level of the first reagent R can be appropriately detected, the first reagent R can be appropriately dispensed by the first reagent dispensing probe 209. Furthermore, even in a case where the measurement control function 93 is configured to detect an abnormality associated with the generation of bubbles (for example, detection of pressure abnormality of the first reagent R in the flow path connected to the first reagent dispensing probe 209, detection of abnormality of the measurement result, and the like), it is possible to reduce the detection of the abnormality and the occurrence of error processing accordingly. As a result, the throughput of the automatic analyzer 1 can be improved.

Furthermore, in the first embodiment, the shielding portions 13A, 13B, 13C, and 13D are provided on the inner upper surface 111 of the reagent container 2042 so as to extend toward the bottom surface 121 of the reagent container 2042.

As a result, the configuration of the shielding portions 13A, 13B, 13C, and 13D provided on the lid portion 11 can be changed in design according to the conditions of rotation and stop of the first reagent storage 204 while the configuration on the main body portion 12 side of the reagent container 2042 is common, so that the cost can be reduced. Moreover, since the shielding portions 13A, 13B, 13C, and 13D do not come into contact with the bottom surface 121 of the reagent container 2042, the number of corner portions on the bottom surface in which the reagent easily remains can be reduced as compared with a configuration in which the shielding portion is provided on the bottom surface (for example, the comparative example of FIG. 7), and the dead volume can be reduced.

Furthermore, in the first embodiment, the outlet 14 for the first reagent R is provided on the inner upper surface 111. Furthermore, the bottom surface 121 is inclined so as to be away from the inner upper surface 111 as approaching the outlet 14. Furthermore, a plurality of shielding portions 13A, 13B, 13C, and 13D is disposed at intervals in the rotation radial direction of the first reagent storage 204. Furthermore, the shielding portion close to the outlet 14 among the plurality of shielding portions 13A, 13B, 13C, and 13D extends to the downward direction D4 more than the shielding portion far from the outlet 14 among the plurality of shielding portions 13A, 13B, 13C, and 13D.

As a result, since each of the shielding portions 13A, 13B, 13C, and 13D can appropriately suppress rapid movement of the first reagent R, bubbles generated in the first reagent R can be further appropriately reduced.

Furthermore, in the first embodiment, the width W of the shielding portions 13A, 13B, 13C, and 13D in the rotation direction of the first reagent storage 204 are reduced from the upper portion to the lower portion of the shielding portions 13A, 13B, 13C, and 13D.

As a result, with a simple configuration in which the width W is reduced from the upper portion to the lower portion of the shielding portions 13A, 13B, 13C, and 13D, the gaps G1 and G2 between the shielding portions 13A, 13B, 13C, and 13D and the side surfaces 1221 and 1222 of the reagent container can be formed so as to increase from the upper portion to the lower portion of the shielding portions 13A, 13B, 13C, and 13D.

Furthermore, in the first embodiment, the width W of the shielding portions 13A, 13B, 13C, and 13D is continuously reduced from the upper portion to the lower portion of the shielding portions 13A, 13B, 13C, and 13D.

As a result, with a simpler configuration in which the width W is continuously reduced from the upper portion to the lower portion of the shielding portions 13A, 13B, 13C, and 13D, the gaps G1 and G2 between the shielding portions 13A, 13B, 13C, and 13D and the side surfaces 1221 and 1222 of the reagent container can be formed so as to increase from the upper portion to the lower portion of the shielding portions 13A, 13B, 13C, and 13D.

Furthermore, in the first embodiment, the end portions 131 and 132 of the shielding portions 13A, 13B, 13C, and 13D in the rotation direction of the first reagent storage 204 have linear shapes inclined with respect to the side surfaces 1221 and 1222 of the reagent container.

As a result, with a simpler configuration in which the end portions 131 and 132 of the shielding portions 13A, 13B, 13C, and 13D have inclined linear shapes, the gaps G1 and G2 between the shielding portions 13A, 13B, 13C, and 13D and the side surfaces 1221 and 1222 of the reagent container can be formed so as to increase from the upper portion to the lower portion of the shielding portions 13A, 13B, 13C, and 13D.

Furthermore, in the first embodiment, the reagent container 2042 further includes the reinforcing portion 15 connected to the shielding portions 13A, 13B, 13C, and 13D.

As a result, even if the width W of the shielding portions 13A, 13B, 13C, and 13D are partially reduced as the sizes of the gaps G1 and G2 are changed in the vertical direction, the strength of the shielding portions 13A, 13B, 13C, and 13D can be appropriately secured by the reinforcing portion 15.

### (First Modification)

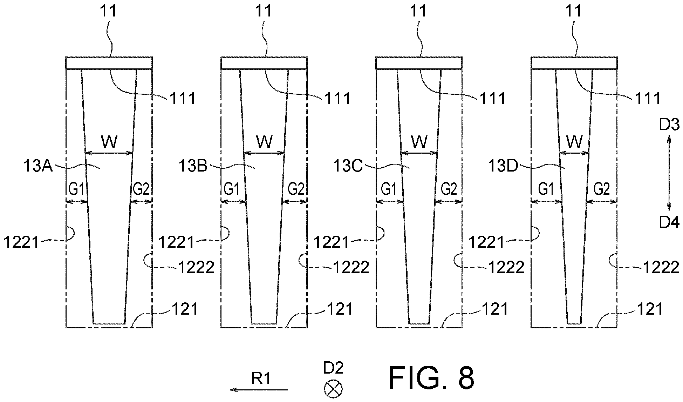

Next, a first modification of the first embodiment in which the widths W of the shielding portions 13A, 13B, 13C, and 13D are made different will be described focusing on a difference from the above-described embodiment. FIG. 8 is a view illustrating the shielding portions 13A, 13B, 13C, and 13D of the reagent container 2042 according to the first modification of the first embodiment.

In the example illustrated in FIG. 8, the gaps G1 and G2 between the shielding portion on the outer diameter side D2 among the plurality of shielding portions 13A, 13B, 13C, and 13D and the side surfaces 1221 and 1222 of the reagent container are larger than the gaps G1 and G2 between the shielding portion on the inner diameter side D1 among the plurality of shielding portions 13A, 13B, 13C, and 13D and the side surfaces 1221 and 1222 of the reagent container. Specifically, at the same height, the gaps G1 and G2 between the second shielding portion 13B and the side surfaces 1221 and 1222 of the reagent container are larger than the gaps G1 and G2 between the first shielding portion 13A and the side surfaces 1221 and 1222 of the reagent container. Furthermore, at the same height, the gaps G1 and G2 between the third shielding portion 13C and the side surfaces 1221 and 1222 of the reagent container are larger than the gaps G1 and G2 between the second shielding portion 13B and the side surfaces 1221 and 1222 of the reagent container. Furthermore, at the same height, the gaps G1 and G2 between the fourth shielding portion 13D and the side surfaces 1221 and 1222 of the reagent container are larger than the gaps G1 and G2 between the third shielding portion 13C and the side surfaces 1221 and 1222 of the reagent container.

That is, in the example illustrated in FIG. 8, the shielding portion on the outer diameter side D2 among the plurality of shielding portions 13A, 13B, 13C, and 13D has the width W smaller than the shielding portion on the inner diameter side D1 among the plurality of shielding portions 13A, 13B, 13C, and 13D. Specifically, at the same height, the width W of the second shielding portion 13B is smaller than the width W of the first shielding portion 13A. Furthermore, at the same height, the width W of the third shielding portion 13C is smaller than the width W of the second shielding portion 13B. Furthermore, at the same height, the width W of the fourth shielding portion 13D is smaller than the width W of the third shielding portion 13C.

According to the example illustrated in FIG. 8, on the outer diameter side D2 in which the flow velocity and the flow rate of the first reagent R are large, the gaps G1 and G2 between the shielding portion and the side surfaces 1221 and 1222 of the reagent container can be increased to facilitate the movement of the first reagent R, so that the occurrence of entrainment and the occurrence of bubbles associated therewith can be effectively reduced. Furthermore, with a simple configuration in which the width W of the shielding portion is reduced on the outer diameter side D2, the gaps G1 and G2 between the shielding portion and the side surfaces 1221 and 1222 of the reagent container can be increased on the outer diameter side D2.

### (Second Modification)

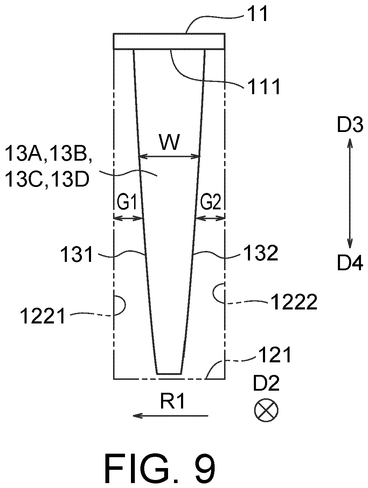

Next, a modification of the shapes of the end portions 131 and 132 of the shielding portions 13A, 13B, 13C, and 13D will be described focusing on differences from the above-described embodiments. FIG. 9 is a view illustrating the shielding portions 13A, 13B, 13C, and 13D of the reagent container 2042 according to a second modification of the first embodiment.

In FIG. 5, an example has been described in which the end portions 131 and 132 of the shielding portions 13A, 13B, 13C, and 13D in the rotation direction R1 of the reagent container 2042 have linear shapes inclined with respect to the side surfaces 1221 and 1222 of the reagent container. On the other hand, in the example illustrated in FIG. 9, the end portions 131 and 132 of the shielding portions 13A, 13B, 13C, and 13D have curved shapes inclined with respect to the side surfaces 1221 and 1222 of the reagent container. More specifically, in the example illustrated in FIG. 9, the end portions 131 and 132 of the shielding portions 13A, 13B, 13C, and 13D have curved shapes curved outward.

Also in the second modification, since the gaps G1 and G2 between the shielding portions 13A, 13B, 13C, and 13D and the side surfaces 1221 and 1222 of the reagent container can be configured to increase from the upper portion to the lower portion of the shielding portions 13A, 13B, 13C, and 13D, bubbles generated in the first reagent R can be appropriately reduced. Furthermore, the degree of freedom in designing the shielding portions 13A, 13B, 13C, and 13D can be improved.

### (Third Modification)

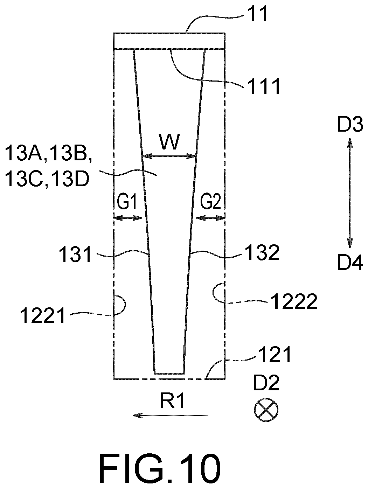

Next, another modification of the shapes of the end portions 131 and 132 of the shielding portions 13A, 13B, 13C, and 13D will be described focusing on differences from the above-described embodiments. FIG. 10 is a view illustrating the shielding portions 13A, 13B, 13C, and 13D of the reagent container 2042 according to a third modification of the first embodiment.

In the example illustrated in FIG. 10, the end portions 131 and 132 of the shielding portions 13A, 13B, 13C, and 13D have curved shapes inclined with respect to the side surfaces 1221 and 1222 of the reagent container. Unlike FIG. 9, in the example illustrated in FIG. 10, the end portions 131 and 132 of the shielding portions 13A, 13B, 13C, and 13D have curved shapes curved inward.

Also in the third modification, since the gaps G1 and G2 between the shielding portions 13A, 13B, 13C, and 13D and the side surfaces 1221 and 1222 of the reagent container can be configured to increase from the upper portion to the lower portion of the shielding portions 13A, 13B, 13C, and 13D, bubbles generated in the first reagent R can be appropriately reduced. Furthermore, the degree of freedom in designing the shielding portions 13A, 13B, 13C, and 13D can be improved.

### (Fourth Modification)

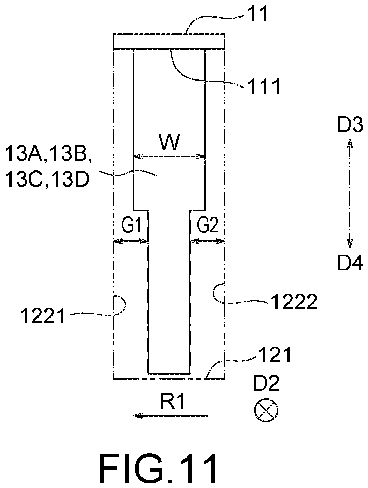

Next, a modification of the width W of the shielding portions 13A, 13B, 13C, and 13D will be described focusing on differences from the above-described embodiments. FIG. 11 is a view illustrating the shielding portions 13A, 13B, 13C, and 13D of the reagent container 2042 according to a fourth modification of the first embodiment.

In FIG. 5, an example has been described in which the width W of the shielding portions 13A, 13B, 13C, and 13D is continuously reduced from the upper portion to the lower portion of the shielding portions 13A, 13B, 13C, and 13D. On the other hand, in the example illustrated in FIG. 11, the width W of the shielding portions 13A, 13B, 13C, and 13D is gradually reduced from the upper portion to the lower portion of the shielding portions 13A, 13B, 13C, and 13D.

Also in the fourth modification, since the gaps G1 and G2 between the shielding portions 13A, 13B, 13C, and 13D and the side surfaces 1221 and 1222 of the reagent container can be configured to increase from the upper portion to the lower portion of the shielding portions 13A, 13B, 13C, and 13D, bubbles generated in the first reagent R can be appropriately reduced. Furthermore, the degree of freedom in designing the shielding portions 13A, 13B, 13C, and 13D can be improved.

### (Second embodiment)

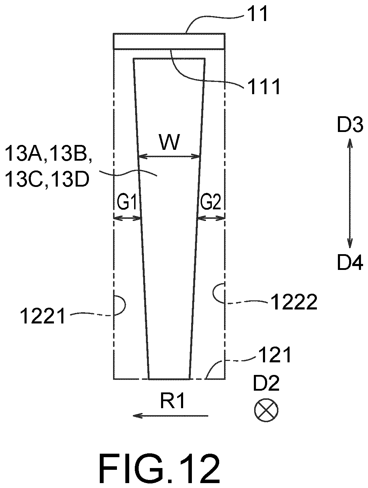

Next, a second embodiment in which the shielding portions 13A, 13B, 13C, and 13D are provided on the bottom surface 121 will be described focusing on differences from the above-described embodiment. FIG. 12 is a view illustrating the shielding portions 13A, 13B, 13C, and 13D of the reagent container 2042 according to the second embodiment.

In the first embodiment, an example in which the shielding portions 13A, 13B, 13C, and 13D are provided on the inner upper surface 111 of the reagent container 2042 has been described. On the other hand, in the example illustrated in FIG. 12, the shielding portions 13A, 13B, 13C, and 13D are provided on the bottom surface 121 of the reagent container 2042 so as to extend in a direction toward the inner upper surface 111 of the reagent container 2042 (that is, the upward direction D3). In other respects, the configurations of the shielding portions 13A, 13B, 13C, and 13D are similar to the configurations illustrated in FIG. 5 of the first embodiment.

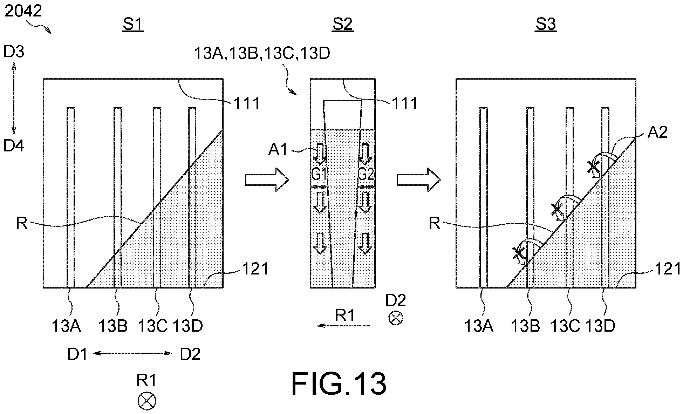

FIG. 13 is a diagram illustrating an example of movement of a reagent in the reagent container 2042 according to the second embodiment. As illustrated in FIG. 13, also in the second embodiment, since the gaps G1 and G2 between the shielding portions 13A, 13B, 13C, and 13D and the side surfaces 1221 and 1222 of the reagent container increase from the upper portion to the lower portion of the shielding portions 13A, 13B, 13C, and 13D, when the rotation of the first reagent storage 204 is stopped, the first reagent R on the downward direction D4 side first returns to the inner diameter side D1 (step S2). As a result, it possible to suppress the occurrence of entrainment in the first reagent R on the upward direction D3 side (step S3).

Note that, similarly to the first embodiment, the first to fourth modifications described above may be applied to the shielding portions 13A, 13B, 13C, and 13D in the second embodiment.

Also in the second embodiment, similarly to the first embodiment, the gaps G1 and G2 between the shielding portions 13A, 13B, 13C, and 13D and the side surfaces 1221 and 1222 of the reagent container are formed to be increased from the upper portion to the lower portion of the shielding portions 13A, 13B, 13C, and 13D. As a result, since the first reagent R on the downward direction D4 side can be moved first to suppress the entrainment of the first reagent R, bubbles generated in the first reagent R can be appropriately reduced. Furthermore, the degree of freedom in designing the shielding portions 13A, 13B, 13C, and 13D can be improved.

According to at least one embodiment described above, bubbles generated in the reagent in the reagent container 2042 can be appropriately reduced.

Note that a term "processor" used in the description of the embodiment means, for example, a central processing unit (CPU), a graphics processing unit (GPU), or a circuitry such as an application-specific integrated circuit (ASIC) or a programmable logic device (for example, a simple programmable logic device (SPLD), a complex programmable logic device (CPLD), or a field-programmable gate array (FPGA)). The processor achieves functions by reading and executing programs stored in the memory 8. Note that, instead of storing the programs in the memory 8, the programs may be directly incorporated in the circuitry of the processor. In this case, the processor achieves the functions by reading and executing the programs incorporated in the circuitry. Note that each processor of a respective one of the above embodiments is not limited to a case where each processor is configured as a single processor circuitry, and a plurality of independent circuitries may be combined to be configured as one processor to achieve the functions. Moreover, the plurality of components in the above embodiment may be integrated into one processor to achieve the functions.

Although some embodiments of the present invention have been described, these embodiments have been presented as examples, and are not intended to limit the scope of the invention. These embodiments can be implemented in various other forms, and various omissions, substitutions, and changes can be made without departing from the scope of the invention as defined by the appended claims. These embodiments and modifications thereof are included in the scope of the invention and are included in the invention described in the claims.

## Claims

1. A reagent container installed in a reagent storage that rotates in an automatic analyzer, the reagent container comprising
a shielding portion that partially shields an inner diameter side and an outer diameter side in the rotation inside the reagent container,
wherein a gap between the shielding portion and a side surface of the reagent container is configured to increase from an upper portion toward a lower portion of the shielding portion.

2. The reagent container according to claim 1, wherein the shielding portion is provided on an inner upper surface of the reagent container so as to extend toward a bottom surface of the reagent container.

3. The reagent container according to claim 1, wherein the shielding portion is provided on a bottom surface of the reagent container so as to extend toward an inner upper surface of the reagent container.

4. The reagent container according to claim 2, wherein
an outlet of a reagent is provided on the inner upper surface,
the bottom surface is inclined so as to be away from the inner upper surface as approaching the outlet,
a plurality of shielding portions is provided at intervals in a rotation radial direction of the reagent storage, and
a shielding portion close to the outlet among the plurality of shielding portions extends downward more than a shielding portion far from the outlet among the plurality of shielding portions.

5. The reagent container according to any one of claims 1 to 4, wherein
a plurality of shielding portions is provided at intervals in a rotation radial direction of the reagent storage, and
a gap between the shielding portion on the outer diameter side among the plurality of shielding portions and the side surface of the reagent container is larger than a gap between the shielding portion on the inner diameter side among the plurality of shielding portions and the side surface of the reagent container.

6. The reagent container according to any one of claims 1 to 5, wherein a width of the shielding portion in a rotation direction of the reagent storage is reduced from the upper portion to the lower portion of the shielding portion.

7. The reagent container according to claim 6, wherein
the plurality of shielding portions is provided at intervals in a rotation radial direction of the reagent storage, and
the width of the shielding portion on the outer diameter side among the plurality of shielding portions is smaller than the width of the shielding portion on the inner diameter side among the plurality of shielding portions.

8. The reagent container according to claim 6, wherein the width of the shielding portion is continuously reduced from the upper portion to the lower portion of the shielding portion.

9. The reagent container according to claim 8, wherein an end portion of the shielding portion in the rotation direction of the reagent storage has a linear shape inclined with respect to the side surface of the reagent container.

10. The reagent container according to claim 8, wherein an end portion of the shielding portion in the rotation direction of the reagent storage has a curved shape inclined with respect to the side surface of the reagent container.

11. The reagent container according to claim 6, wherein the width of the shielding portion is gradually reduced from the upper portion to the lower portion of the shielding portion.

12. The reagent container according to claim 1, further comprising a reinforcing portion connected to the shielding portion.

13. The reagent container according to claim 9, wherein an angle formed by the end portion of the shielding portion in the rotation direction with respect to the side surface of the reagent container is 2° or more.

14. The reagent container according to claim 9, wherein
the side surface of the reagent container is a side surface having a direction intersecting the rotation direction, and
the angle is larger than a second angle formed by the end portion of the shielding portion in a rotation radial direction with respect to a second side surface of the reagent container having a direction intersecting the rotation radial direction of the reagent storage.

15. An automatic analyzer comprising:
a reagent storage that rotates; and
a reagent container installed in the reagent storage, wherein
the reagent container includes:
a shielding portion that partially shields an inner diameter side and an outer diameter side in the rotation inside the reagent container, and
a gap between the shielding portion and a side surface of the reagent container is configured to increase from an upper portion toward a lower portion of the shielding portion.
